# EUROPÄISCHE PATENTSCHRIFT

(11) **EP 1 925 476 B1**
(45) Veröffentlichungstag und Bekanntmachung des Hinweises auf die Patenterteilung: **06.01.2010**
(21) Anmeldenummer: 07117616.8
(22) Anmeldetag: 01.10.2007
(51) Int. Cl.: B60H 1/00

(54) **Verfahren und System zur Steuerung der Klimatisierung in einem Kraftfahrzeug**
Method and system for operating the air conditioning in a motor vehicle
Procédé et système de commande d'une climatisation dans un véhicule automobile

(30) Priorität: 21.11.2006 DE 102006054752
(43) Veröffentlichungstag der Anmeldung: 28.05.2008
(73) Patentinhaber: ROBERT BOSCH GMBH, 70442 Stuttgart (DE)
(72) Erfinder: Bergt, Martin, 77815 Bühl (DE); Pack, Andreas, 67500 Hagenau (FR); Neubauer, Mario, 76473 Iffezheim (DE)

(56) Entgegenhaltungen:
- EP-A- 0 950 587
- WO-A-2006/048357
- GB-A- 2 311 602
- US-A- 4 867 561
- US-B1- 6 768 099

## Beschreibung

Die vorliegende Erfindung betrifft ein Verfahren und ein System zur Steuerung der Klimatisierung in einem Kraftfahrzeug mithilfe eines Regensensors.

### Stand der Technik

Aus dem Stand der Technik sind so genannte Regensensoren für Kraftfahrzeuge hinlänglich bekannt.

Ebenso sind aus dem Stand der Technik Sensoren bekannt, welche die das Kraftfahrzeug umgebende Wärmestrahlung messen, und in Abhängigkeit von der Intensität der Wärmestrahlung das Klima im Fahrzeuginnenraum steuern.

Bei modernen Kraftfahrzeugen sind diese beiden Typen von Sensoren mittlerweile beide gleichzeitig als Serienausstattung vorhanden. Nachteilig dabei ist jedoch, dass die Kosten für das Bereitstellen von zwei Sensoren relativ hoch sind.

US 6768099 B1 offenbart einen Verfahren nach dem Oberbegriff des Anspruchs 1.

### Offenbarung der Erfindung

### Technische Aufgabe

Es ist deshalb eine Aufgabe der vorliegenden Erfindung, die Nachteile des Standes der Technik zu umgehen, und ein kostengünstigeres und verbessertes Verfahren und ein System sowohl zum Erkennen von Regen als auch zur Steuerung der Klimatisierung bereitzustellen.

Technische Lösung

Diese Aufgabe wird durch die Merkmale des Verfahrensanspruchs 1 und des Systemanspruch 5 gelöst.

Hierzu schlägt die Erfindung unter einem ersten Aspekt ein Verfahren zur Steuerung der Klimatisierung in einem Kraftfahrzeug und zum Erkennen von Regen in der Umgebung des Kraftfahrzeugs vor, umfassend ein Sensorsystem mit einem Sender zum Ausstrahlen von elektromagnetischer Strahlung und einem Empfänger zum Empfangen von elektromagnetischer Strahlung, wobei in einer ersten Betriebsart zum Erkennen von Regen die Schritte ausgeführt werden: Ausstrahlen von elektromagnetischer Strahlung durch den Sender; Empfangen der an einer Reflexionsfläche reflektierten elektromagnetischen Strahlung durch einen Empfänger; und Ausgeben eines Signals von dem Empfänger in Abhängigkeit von der Intensität der empfangenen reflektierten elektromagnetischen Strahlung an eine Steuerung; gekennzeichnet durch eine zweite Betriebsart mit den folgenden Schritte zur Steuerung der Klimatisierung des Kraftfahrzeuginnern: Empfangen von elektromagnetischer Strahlung aus der Umgebung des Kraftfahrzeugs durch den Empfänger, während der Sender keine elektromagnetische Strahlung ausstrahlt; Ausgeben eines Signals von dem Empfänger in Abhängigkeit von der Intensität der empfangenen elektromagnetischen Strahlung aus der Umgebung an eine Steuerung; und Steuern der Klimatisierung in dem Kraftfahrzeug durch die Steuerung entsprechend dem ausgegebenen Signal, wenn der Sender keine elektromagnetische Strahlung ausstrahlt.

Unter einem zweiten Aspekt schlägt die Erfindung Sensorsystem vor, umfassend einen Sender zum Ausstrahlen von elektromagnetischer Strahlung und einen Empfänger zum Empfangen von elektromagnetischer Strahlung,wobei das Sensorsystem dazu ausgelegt ist, eine erste Betriebsart und eine zweite Betriebsart auszuführen, wobei in der zweiten Betriebsart der Empfänger keine elektromagnetische Strahlung von dem Sender empfängt.

### Vorteilhafte Wirkungen

Der Vorteil des erfindungsgemäßen Verfahrens bzw. Systems ergibt sich daraus, dass mit einem einzigen Sensorsystem sowohl die Erkennung von Regen durchgeführt werden kann als auch Wärmestrahlung gemessen werden kann, um die Klimatisierung des Fahrzeuginnenraums zu steuern. Als Sensorsystem kann ein bereits vorhandener Regensensor und die dazu gehörige Verkabelung benutzt werden, so dass ein zusätzlicher Wärmesensor entfällt. Dies spart Kosten und Bauraum.

Vorzugsweise wird die elektromagnetische Strahlung durch den Empfänger in einem Wellenlängenbereich von 400 nm bis 1100 nm, insbesondere von 750 nm bis 1100 nm, empfangen. In diesen Bereichen ist die empfangene Strahlung im Wesentlichen direkt proportional zu der empfundenen Wärmestrahlung.

In weiterer Ausgestaltung kann der Empfänger über mehrere Messkanäle verfügen, wobei das Signal aus der von den mehreren Messkanälen empfangenen Strahlung ermittelt wird, wobei der Vorteil darin liegt, dass das Signal die Intensität der Strahlung noch genauer wiedergibt.

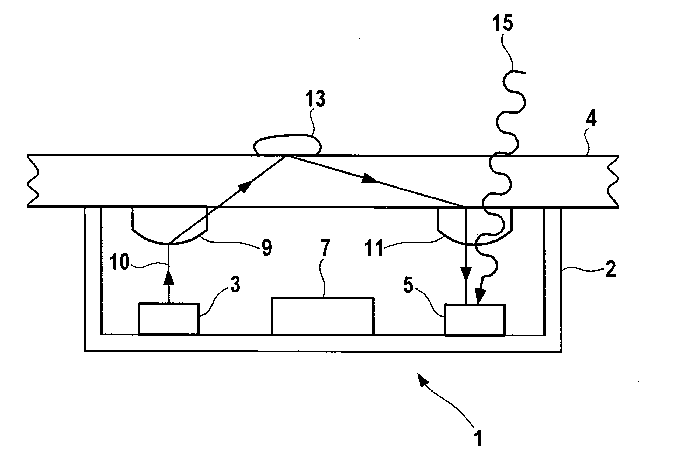

### Kurze Beschreibung der Zeichnung

Nachfolgend wird die Erfindung anhand der einzigen Figur erläutert, wobei die Figur eine schematische Darstellung eines Sensorsystems zeigt, mit welchem das erfindungsgemäße Verfahren angewendet werden kann.

### Ausführungsformen der Erfindung

In der einzigen Figur ist schematisch ein Sensorsystem 1 dargestellt, welches sowohl - in einer ersten Betriebsart - zur Steuerung der Klimatisierung eines Kraftfahrzeuginnenraums als auch - in einer zweiten Betriebsart - zur Erkennung von Regen bzw. Feuchtigkeitströpfchen außerhalb des Fahrzeugs verwendet werden kann. Das Sensorsystem stellt einen Regensensor dar, der auch zur Erfassung der Wärmestrahlung verwendet wird.

Dazu ist zunächst in einem Gehäuse 2, welches an einem transparenten Karosserieteil 4, wie z.B. einer Windschutzscheibe, angebracht ist, ein Sender 3, ein Empfänger 5 und eine Steuerung 7 untergebracht. Der Sender 3 ist im dargestellten Beispiel eine LED, welche elektromagnetische Strahlung im IR-Wellenlängenbereich von etwa 750 nm bis 1100 nm abstrahlt.

Der Empfänger 5 ist ein Sensor, wie z.B. eine Fotodiode, die im Wesentlichen empfindlich für IR ist, aber auch für andere Wellenlängenbereiche empfindlich sein kann.

In einer ersten Betriebsart des Sensorsystems 1 strahlt die LED 3 Licht in Form eines Lichtstrahls 10 in Richtung auf die Windschutzscheibe 4 ab. Das Licht wird im dargestellten Beispiel durch ein erstes Linsenelement 9 derart gebrochen, dass Totalreflexion in der Windschutzscheibe 4 auftritt, wenn keine Regentropfen 13 auf der Windschutzscheibe 4 vorhanden sind. Der reflektierte Lichtstrahl 10 wird über ein weiteres Linsenelement 11 auf die Fotodiode 5 fokussiert. Es wird die volle Intensität von der Fotodiode 5 gemessen.

Bei Vorhandensein von Regen- bzw. Feuchtigkeitstropfen (z.B. auch Nebeltröpfchen) wird durch die Schwächung der Totalreflexion eine verminderte Intensität von der Fotodiode 5 registriert und ein entsprechendes Signal an die Steuerung 7 geleitet. Aufgrund dieses Signals steuert die Steuerung 7 z.B. Scheibenwischer, ein Cabrioverdeck, Schiebedach, Scheinwerfer etc.

In einer zweiten Betriebsart des Sensorsystems 2 wird zur Steuerung der Klimatisierung des Kraftfahrzeugs zunächst die Abstrahlung von Licht durch die LED 3 unterbunden, z.B. durch Abschalten der Energieversorgung für die LED 3 oder durch Abschalten der LED 3.

Der Empfänger 5 detektiert nun nur von der Umgebung des Kraftfahrzeugs kommende elektromagnetische Strahlung, hier angedeutet durch einen gewellten Pfeil 15. Da der Empfänger 5 im Wesentlichen empfindlich für den IR-Bereich ist, ist das von dem Empfänger 5 an die Steuerung 7 ausgegebene Signal proportional zur außerhalb des Fahrzeugs herrschenden Wärmestrahlung. Das Signal wird zur Steuerung 7 einer hier nicht dargestellten Klimaanlage und/oder Standlüfter des Kraftfahrzeugs genutzt, um eine bestimmte Temperatur im Fahrzeuginneren aufrechtzuerhalten.

Das Sensorsystem kann in der zweiten Betriebsart aber auch dazu genutzt werden, z.B. die Scheinwerfer des Fahrzeugs in Abhängigkeit von Regenaufkommen, insbesondere abhängig von vorbestimmten Regenstärken zu steuern.

## Patentansprüche

1. Verfahren zur Steuerung der Klimatisierung in einem Kraftfahrzeug und zum Erkennen von Regen bzw. Feuchtigkeit in der Umgebung des Kraftfahrzeugs, umfassend ein Sensorsystem (1) mit einem Sender (3) zum Ausstrahlen von elektromagnetischer Strahlung und einem Empfänger (5) zum Empfangen von elektromagnetischer Strahlung, wobei in einer ersten Betriebsart zum Erkennen von Regen die Schritte ausgeführt werden:
- Ausstrahlen von elektromagnetischer Strahlung durch den Sender (3);
- Empfangen der an einer Reflexionsfläche reflektierten elektromagnetischen Strahlung durch einen Empfänger (5); und
- Ausgeben eines Signals von dem Empfänger (5) in Abhängigkeit von der Intensität der empfangenen reflektierten elektromagnetischen Strahlung an eine Steuerung (7);
**gekennzeichnet durch** eine zweite Betriebsart mit den folgenden Schritte zur Steuerung der Klimatisierung:
- Empfangen von elektromagnetischer Strahlung aus der Umgebung des Kraftfahrzeugs **durch** den Empfänger (5), während der Sender (3) keine elektromagnetische Strahlung ausstrahlt;
- Ausgeben eines Signals von dem Empfänger (5) in Abhängigkeit von der Intensität der empfangenen elektromagnetischen Strahlung aus der Umgebung an eine Steuerung (7); und
- Steuern der Klimatisierung in dem Kraftfahrzeug **durch** die Steuerung (7) entsprechend dem ausgegebenen Signal, wenn der Sender (3) keine elektromagnetische Strahlung ausstrahlt.

2. Verfahren nach Anspruch 1, wobei das Ausstrahlen von elektromagnetischer Strahlung durch den Sender (5) in einem Wellenlängenbereich von 400 nm bis 1100 nm, insbesondere von 750 nm bis 1100 nm erfolgt.

3. Verfahren nach Anspruch 1 oder 2, wobei das Empfangen von elektromagnetischer Strahlung durch den Empfänger (5) in einem Wellenlängenbereich von 400 nm bis 1100 nm, insbesondere von 750 nm bis 1100 nm erfolgt.

4. Verfahren nach einem der Ansprüche 1 bis 3, wobei das Empfangen von elektromagnetischer Strahlung durch den Empfänger (5) über mehrere Messkanäle des Empfängers (5) erfolgt, und wobei das Signal ermittelt wird aus der von den mehreren Messkanälen empfangenen Strahlung.

5. Sensorsystem (1), umfassend einen Sender (3) zum Ausstrahlen von elektromagnetischer Strahlung und einen Empfänger (5) zum Empfangen von elektromagnetischer Strahlung,
**dadurch gekennzeichnet, dass**
das Sensorsystem (1) dazu ausgelegt ist, in einer ersten Betriebsart Regen zu erkennen und in einer zweiten Betriebsart eine Wärmestrahlung zu erfassen, wobei in der zweiten Betriebsart der Sender (3) keine elektromagnetische Strahlung abgibt und der Empfänger (5) Wärmestrahlung der Umgebung erfasst.

6. Sensorsystem (1) nach Anspruch 5, wobei der Sender (3) elektromagnetische Strahlung in einem Wellenlängenbereich von 400 nm bis 1100 nm, insbesondere von 750 nm bis 1100 nm ausstrahlt.

7. Sensorsystem (1) nach Anspruch 5 oder 6, wobei der Empfänger (5) elektromagnetische Strahlung in einem Wellenlängenbereich von 400 nm bis 1100 nm, insbesondere von 750 nm bis 1100 nm empfängt.

8. Sensorsystem (1) nach einem der Ansprüche 5 bis 7, wobei der Empfänger (5) mehrere Messkanäle zum Empfangen der elektromagnetischen Strahlung aufweist.

9. Sensorsystem (1) nach einem der Ansprüche 5 bis 8, weiterhin umfassend eine Steuerung (7), die mit dem Empfänger (5) in Verbindung steht.

## Claims

1. Method for controlling the air-conditioning system in a motor vehicle and for identifying rain or moisture in the area surrounding the motor vehicle, comprising a sensor system (1) having a transmitter (3) for emitting electromagnetic radiation and having a receiver (5) for receiving electromagnetic radiation, wherein, in a first operating mode for identifying rain, the following steps are executed:
- emission of electromagnetic radiation by the transmitter (3);
- reception of the electromagnetic radiation, which is reflected at a reflection surface, by a receiver (5); and
- output of a signal from the receiver (5) to a controller (7) as a function of the intensity of the received reflected electromagnetic radiation;
**characterized by** a second operating mode comprising the following steps for controlling the air-conditioning system:
- reception of electromagnetic radiation from the area surrounding the motor vehicle by the receiver (5) while the transmitter (3) does not emit any electromagnetic radiation;
- output of a signal from the receiver (5) to a controller (7) as a function of the intensity of the received electromagnetic radiation from the surrounding area; and
- control of the air-conditioning system in the motor vehicle by the controller (7) in accordance with the output signal when the transmitter (3) does not emit any electromagnetic radiation.

2. Method according to Claim 1, wherein electromagnetic radiation is emitted by the transmitter (5) in a wavelength range of from 400 nm to 1100 nm, in particular of from 750 nm to 1100 nm.

3. Method according to Claim 1 or 2, wherein electromagnetic radiation is received by the receiver (5) in a wavelength range of from 400 nm to 1100 nm, in particular of from 750 nm to 1100 nm.

4. Method according to one of Claims 1 to 3, wherein the electromagnetic radiation is received by the receiver (5) by means of a plurality of measuring channels of the receiver (5), and wherein the signal is determined from the radiation received by the plurality of measuring channels.

5. Sensor system (1) comprising a transmitter (3) for emitting electromagnetic radiation and comprising a receiver (5) for receiving electromagnetic radiation,
**characterized in that**
the sensor system (1) is designed to identify rain in a first operating mode and to detect thermal radiation in a second operating mode, wherein no electromagnetic radiation is output in the second operating mode of the transmitter (3) and the receiver (5) detects thermal radiation from the surrounding area.

6. Sensor system (1) according to Claim 5, wherein the transmitter (3) emits electromagnetic radiation in a wavelength range of from 400 nm to 1100 nm, in particular of from 750 nm to 1100 nm.

7. Sensor system (1) according to Claim 5 or 6, wherein the receiver (5) receives electromagnetic radiation in a wavelength range of from 400 nm to 1100 nm, in particular of from 750 nm to 1100 nm.

8. Sensor system (1) according to one of Claims 5 to 7, wherein the receiver (5) has a plurality of measuring channels for receiving the electromagnetic radiation.

9. Sensor system (1) according to one of Claims 5 to 8, further comprising a controller (7) which is connected to the receiver (5).

## Revendications

1. Procédé de commande de la climatisation d'un véhicule automobile et de détection de la pluie ou de l'humidité dans l'environnement du véhicule automobile qui comprend un système (1) de détecteurs doté d'un émetteur (3) qui émet un rayonnement électromagnétique et d'un récepteur (5) qui reçoit le rayonnement électromagnétique,
et dans lequel les étapes suivantes sont exécutées dans un premier mode de fonctionnement de détection de pluie :
- émission d'un rayonnement électromagnétique par l'émetteur (3),
- réception par un récepteur (5) du rayonnement électromagnétique réfléchi par une surface réfléchissante et
- envoi par le récepteur (5) à une commande (7) d'un signal qui est fonction de l'intensité du rayonnement électromagnétique réfléchi et reçu,
**caractérisé par**
un deuxième mode de fonctionnement de commande de la climatisation qui présente les étapes suivantes :
- réception d'un rayonnement électromagnétique provenant de l'environnement du véhicule automobile par le récepteur (5) pendant que l'émetteur (3) n'émet aucun rayonnement électromagnétique,
- envoi par le récepteur (5) à une commande (7) d'un signal qui est fonction de l'intensité du rayonnement électromagnétique reçu en provenance de l'environnement et
- commande de la climatisation du véhicule automobile par la commande (7) en fonction du signal émis lorsque l'émetteur (3) n'émet aucun rayonnement électromagnétique.

2. Procédé selon la revendication 1, dans lequel l'émission d'un rayonnement électromagnétique par l'émetteur (5) s'effectue dans une plage de longueurs d'onde de 400 nm à 1100 nm et en particulier de 750 nm à 1100 nm.

3. Procédé selon les revendications 1 ou 2, dans lequel la réception d'un rayonnement électromagnétique par le récepteur (5) s'effectue dans une plage de longueurs d'onde de 400 nm à 1100 nm et en particulier de 750 nm à 1100 nm.

4. Procédé selon l'une des revendications 1 à 3, dans lequel la réception du rayonnement électromagnétique par le récepteur (5) s'effectue par plusieurs canaux de mesure du récepteur (5), le signal étant déterminé à partir de rayonnement reçu par les différents canaux de mesure.

5. Système (1) de détecteurs comprenant un émetteur (3) qui émet un rayonnement électromagnétique et un récepteur (5) qui reçoit un rayonnement électromagnétique,
**caractérisé en ce que**
le système (1) de détecteurs est conçu pour détecter la pluie dans un premier mode de fonctionnement et pour détecter un rayonnement thermique dans un deuxième mode de fonctionnement, l'émetteur (3) n'émettant aucun rayonnement électromagnétique dans le deuxième mode de fonctionnement et le récepteur (5) détectant alors le rayonnement thermique de l'environnement.

6. Système (1) de détecteurs selon la revendication 5, dans lequel l'émetteur (3) émet un rayonnement électromagnétique dans une plage de longueurs d'onde de 400 nm à 1100 nm et en particulier de 750 nm à 1100 nm.

7. Système (1) de détecteurs selon les revendications 5 ou 6, dans lequel le récepteur (5) reçoit un rayonnement électromagnétique dans une plage de longueurs d'onde de 400 nm à 1100 nm et en particulier de 750 nm à 1100 nm.

8. Système (1) de détecteurs selon l'une des revendications 5 à 7, dans lequel le récepteur (5) présente plusieurs canaux de mesure qui reçoivent le rayonnement électromagnétique.

9. Système (1) de détecteurs selon l'une des revendications 5 à 8, comprenant en outre une commande (7) raccordée au récepteur (5).
